# EUROPEAN PATENT SPECIFICATION

(11) **EP 2 868 577 B1**
(45) Date of publication and mention of the grant of the patent: **01.03.2017**
(21) Application number: 13191075.4
(22) Date of filing: 31.10.2013
(51) Int. Cl.: B64C 39/02, B64D 47/08

(54) **REMOTELY CONTROLLABLE AIRPLANE ADAPTED FOR BELLY-LANDING**
FERNSTEUERBARES, FÜR BAUCHLANDUNG GEEIGNETES FLUGZEUG
AVION COMMANDABLE À DISTANCE ADAPTÉ POUR UN ATTERRISSAGE SUR LE VENTRE

(43) Date of publication of application: 06.05.2015
(73) Proprietor: Rigas Tehniska Universitate, 1658 Riga (LV)
(72) Inventor: Urbahs, Aleksandrs, 1029 Riga (LV); Petrovs, Vladimirs, 1029 Riga (LV); Jakovlevs, Aleksandrs, 5701 Ludza (LV); Urbaha, Margarita, 1029 Riga (LV); Bulanovs, Vladimirs, 1005 Riga (LV); Ozols, Ilmars, 2144 Krimuldas pagasts (LV)
(74) Representative: Osmans, Voldemars

(56) References cited:
- US-A- 4 746 082
- US-A1- 2007 152 099
- US-A1- 2010 282 897
- US-B1- 6 533 218

## Description

### Technical Field

The invention relates to remotely controllable airplanes adapted for belly-landing and in particular to such airplanes having an under-fuselage payload.

### Background Art

Remotely controllable airplanes find wide application for military and civilian purposes when manned flight operations are unacceptably costly and/or dangerous. For example, unmanned aircraft outfitted with remotely operated cameras can perform a wide variety of surveillance missions, including reconnaissance photography, national border patrols, forestry monitoring, agriculture monitoring, road traffic monitoring, etc.

Small remotely controllable airplanes also called unmanned aerial vehicles or UAVs typically are designed to be launched from a special launcher or by hand and land on dry land. As weight and size are paramount in the design of small unmanned vehicles some of the airplanes do not have dedicated landing gear and are designed for belly-landing on the fuselage or on the under-fuselage container.

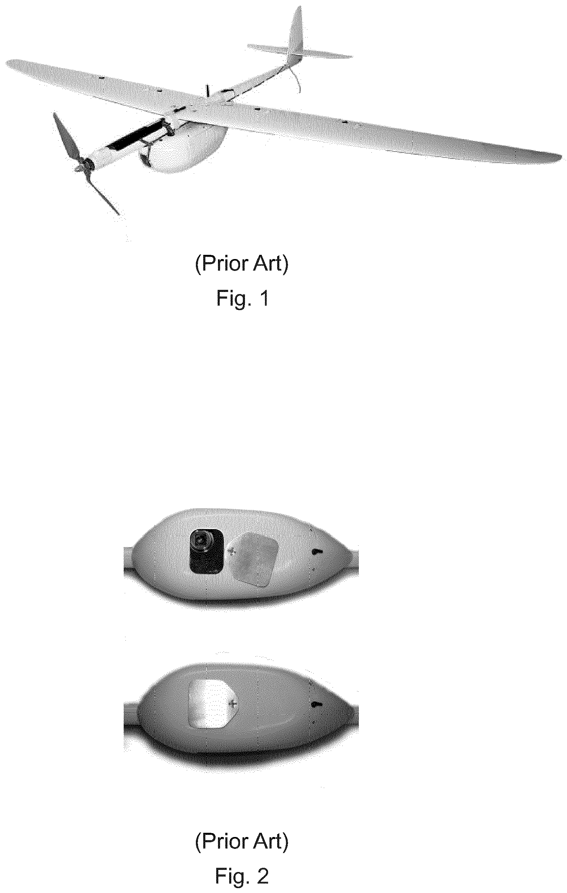

An example of an airplane adapted for belly-landing is a light airplane Aeromapper manufactured by Aeromao company http://www.aeromao.com. This airplane is adapted for belly-landing and comprises an airframe with a wing, tail, fuselage, as well as electrically powered motor with a propeller, and an under-fuselage container with an optional forward looking video camera and a ground-facing camera installed inside. During take-off and landing, the camera is protected by a door in the belly of the aircraft, that opens only while mapping is taking place. In Fig. 1 an overall view of the Aeromapper is shown, and in Fig. 2 the under-fuselage container with the camera door opened and closed.

The problem with the prior art airplane is in that the camera field of view is limited by the door size, the camera protection during landing is not sufficient, various payloads are not suitable for use with the small door opening, therefore the applications of the prior art airplane are limited by the door size.

US 2007/0152099 A1 proposes the onboard optronics system comprising at least one optronics sensor, for example a camera, defining a target line which needs to be able to be addressed in a given space. It is equipped with a mechanism for stabilizing and orienting the target line. The system is modular, comprising in particular a mechanical structure designed to be the interface with the carrier, said mechanical structure comprising a central module forming a section with three interfaces, namely said interface with the carrier and two lateral interfaces that can receive other modules.

Replaceable lateral modules are not suitable for belly-landing aircrafts as they are subjected to a heavy impact and may be damaged during landing.

In the US 6 523 218 B is proposed a reconnaissance pod for viewing a scene. The pod has a structural backbone extending generally parallel to a pod axis, a forward housing affixed to the backbone, and an aft housing affixed to the backbone. The aft housing is separated from the forward housing along the pod axis. A central housing is mounted between the forward housing and the aft housing along the pod axis. A controllable actuator drives the rotation of the central housing about the pod axis.

However, the consdtruction of the reconnaissance pod does not allow for different replaceable modules carrying various surveillance equipments. In such a case the pod as a whole needs to be replaced to change the equipment.

It is therefore a broad object of the present invention to improve the prior art airplane. It is further object of the present invention to provide a better protection for the payload during landing.

It is another object of the present invention to provide a better field of view for the surveillance equipment carried by the airplane.

It is still another object of the present invention to provide a replaceable payload module to facilitate use of various surveillance equipments.

### Summary of invention

In accordance with the present invention, there is provided a remotely controllable airplane adapted for belly-landing, the airplane comprising a fuselage, a wing, a tail, a motor with a propeller, and an under-fuselage payload container adapted for carrying a surveillance equipment, wherein the payload container comprises a front module , an aft module, both coupled to the fuselage and spaced apart along the fuselage axis, and a central module, wherein the central module is rotatably attached to the front module and to the aft module, wherein the front module and the aft module are each installed on pylons attached to the fuselage and the airplane is adapted for replacement of only the central module by different replaceable central modules with various surveillance equipment.

Such configuration of the payload container provides for improved field of view for the surveillance equipment installed in the central module. With a rotatable central module the protection of the camera or other surveillance equipment does not depend on the size of window or opening in the module, therefore the surveillance equipment that require large opening in the container wall may be used. Installing the payload container at some distance from the fuselage reduces or even eliminates the shadowing of the navigation camera by the airplane propeller as well as reduces requirement for the aircraft levelling during landing.

Replacement of a whole central module is easier than replacement of the equipment therein. Whereas replacement of only one central module in comparison to replacement of the whole payload module is more economical as the part of the equipment that is common for various surveillance equipment, e.g. batteries, controllers, rotation actuator, navigation equipment, are installed in the front and aft modules and only the specialised part of the equipment, such as cameras, sensors, etc. are replaceable.

Preferably, the front module comprises a navigation video camera, having a dedicated video camera for navigation purpose allows for separate optimisation of the airplane control system and optimisation of various payloads.

Preferably, the under-fuselage payload container is such placed that the central module geometrical centre is under the airplane centre of gravity when the airplane is in the horizontal flight. Such placement of the payload container allows for changing payload weight without changing the airplane balance.

Preferably, the central module has an opening in its lower part, that is the side turned to the ground during the airplane horizontal flight. Depending on the surveillance equipment the opening may be protected by an optically or radio transparent material.

The central module may be adapted for carrying various surveillance equipments. For example, the airplane may carry such equipment as a video camera, a photo camera, and an infrared camera.

Preferably, the central module is adapted for rotation in at least within ±90° range. Such range provides for both large enough field of view for the surveillance equipment and for sufficient protection during landing.

More preferably, the central module is adapted for rotation in at least within ±180° range. Enlarged rotation range not only provides for an enlarged field of view, but also for a better protection of the surveillance equipment during landing as the opening in the central module, which is facing down when surveillance equipment is in operation, is turned to face the fuselage during landing.

Advantageously, the payload container is having a spindle-shaped form with the container axis parallel to the fuselage axis, and the central module rotatable around the container axis. The streamlined shape of the container reduces air resistance.

Preferably, the central module is having a central position and a landing position, wherein the central position is the position when, during the horizontal flight, the surveillance equipment is targeting down, whereas the landing position is the position turned from the central position at at least 45°.

Preferably, the airplane is adapted for hand launch. The present invention is most advantageously suitable for small airplanes that are launched and retrieved without any additional appliances, i.e. for airplanes that are hand launched by the operator and belly-landed on the dry land, and after replacement or re-charge of batteries are ready for the next flight.

Other features and advantages of the present invention will be apparent from the following more detailed description of the preferred embodiment, taken in conjunction with the accompanying drawings, which illustrate, by way of example, the principles of the invention. The scope of the invention is not, however, limited to this preferred embodiment.

### Brief description of drawings

Fig. 1 shows a prior art airplane.
Fig. 2 shows an under-fuselage container of the aeroplane in Fig. 1.
Fig. 3 is an overall view of an embodiment of the airplane.
Fig. 4 is a side view of the airplane.
Fig. 5 is a bottom view.
Fig. 6 is a front view
Fig. 7 is an enlarged side view and Fig. 8 an enlarged bottom view of the payload container.

### Description of embodiments

The present invention will be further described using the following exemplary embodiments.

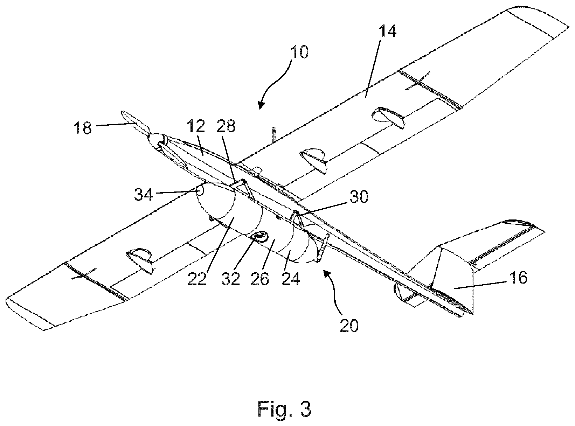

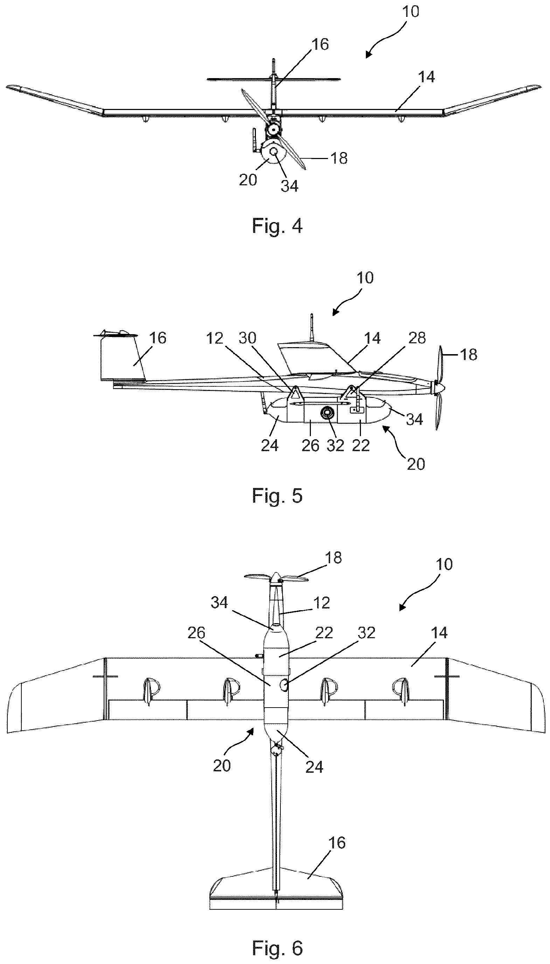

Fig. 3. shows an overall view of a remotely controller airplane according to one embodiment of the present invention, the airplane being generally indicated by the numeral 10. Additionally, side, bottom, and front views of the airplane 10 are shown in Fig. 4 to 6.The airplane 10 comprises a fuselage 12, a wing 14, a tail 16, and a motor with a propeller 18 installed at the front of the fuselage 12. The airplane 10 further comprises an under-fuselage payload container 20 adapted for carrying surveillance equipment. The container 10 is of a tubular or cylindrical form with tapered off ends.
The longitudinal axis of the container 20 is in parallel with the airplane axis. The payload container 20 is divided along its longitudinal axis in three parts or modules: a front module 22, a central module 26, and an aft module 24. The front module 22 is coupled to the fuselage 12 by two pylons 28 whereas the aft module 24 is also coupled to the fuselage 12 by two pylons 30. The front module 22 and the aft module 24 are spaced apart along the fuselage axis with the central module 26 installed between them.
The central module 26 is rotatably attached to both the front module 22 and the aft module 24, so that it can rotate about the longitudinal axis of the payload container 20.
The central module 26 has an opening 32 in its external wall for operation of the surveillance equipment, for example, a photo camera installed in the module 26. The aircraft 10 is equipped with a navigation camera 34 installed in the front module 22.

The airplane 10 is equipped with an electric motor and collapsible propeller 18.
Additional airplane equipment such as an autopilot system, radio equipment, and control system are installed in the fuselage.

The placement of the under-fuselage payload container 20 along the fuselage axis is such chosen that the geometrical centre of the central module 26 is under the airplane centre of gravity when the airplane 10 is in the horizontal flight. Such placement of the payload container 20 allows for changing payload weight without changing the airplane balance. The payload in the central module 26 is such installed that the module centre of gravity is near its geometrical centre, and then the weight of the central module 26 has a small impact on the overall airplane balance.

The rotation of the central module 26 is provided by an electric actuator installed in the front module 22 and controlled by a microprocessor. The shaft of the actuator has a cogwheel that is coupled with another cogwheel fixed on the central module 26. Thus an angular position of the central module 26 can be precisely controlled by the processor. The processor may additionally provide stabilisation function maintaining stable angular position of the central module 26 in relation to the horizon.

The operation of the airplane is as follows. During the airplane launching the central module 26 is in a landing position, that is the position when the opening 32 is facing away from the downward direction, preferably the opening 32 is facing the fuselage 10.

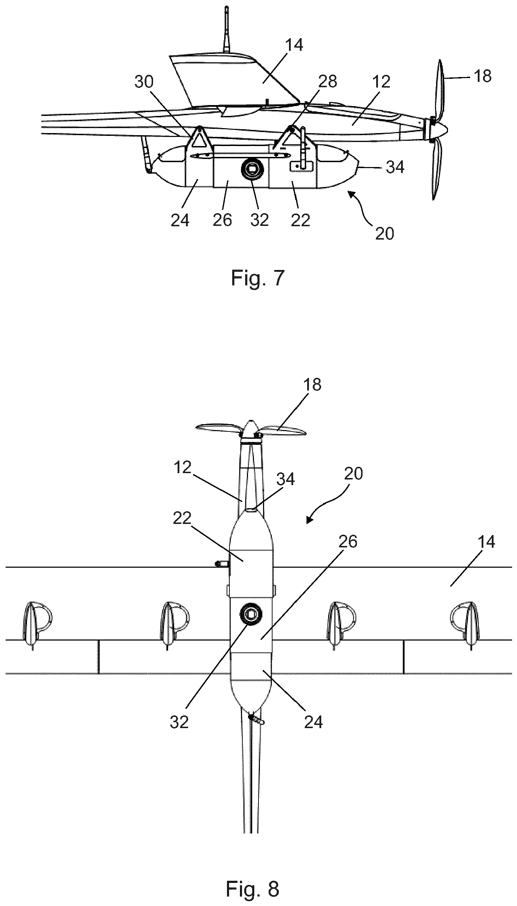

During normal flying operation the central module 26 is turned in the operation position, that is the position when the installed in the module 26 surveillance equipment is targeting the intended aim. The angular position of the central module 26 may be operationally adjusted during the flight, for example to provide camera sweeping to cover a larger area or to compensate for changes in the airplane position, etc. For example, in Fig. 7 the module 26 is turned so that the camera installed herein is looking sideways, whereas in Fig. 8 the module 26 is turned so that the camera is looking downwards.

During landing the central module 26 is turned into landing position again. Depending on the installed in the module 26 surveillance equipment the landing position may differ from the one when opening 32 is facing the fuselage 10 to provide an optimal orientation of the surveillance equipment for withstanding the impact with the ground during landing.

### Industrial applicability

The present invention may be utilized when applied to a remotely controllable airplane adapted for belly-landing and having an under-fuselage container for carrying surveillance equipment. The invention provides for improved field of view, improved protection of the equipment. The invention also provides for easy replacement of various surveillance equipments.

### Reference signs list

10. airplane
12. fuselage
14. wing
16. tail
18. propeller
20. payload container
22. front module
24. aft module
26. central module
28, 30 pylon
32. opening (in the central module)
34. navigation camera

## Claims

1. A remotely controllable airplane (10) adapted for belly-landing, the airplane (10) comprising a fuselage (12), a wing (14), a tail (16), a motor with a propeller (18), and an under-fuselage payload container (20) adapted for carrying a surveillance equipment,
wherein the payload container (20) comprises a front module (22), an aft module (24), both coupled to the fuselage (12) and spaced apart along the fuselage axis, and a central module (26), wherein the central module (26) is rotatably attached to the front module (22) and to the aft module (24), **characterised in that**
the front module (22) and the aft module (24) are each installed on pylons (28, 30) attached to the fuselage (12), and the airplan (10) is adapted for replacement of only the central module (26) by different replaceable central modules with various surveillance equipment.

2. The airplane (10) according to any previous claim wherein the front module (22) comprises a navigation video camera (34).

3. The airplane (10) according to any previous claim wherein the under-fuselage payload container (20) is such placed that the central module geometrical centre is under the airplane centre of gravity when the airplane (10) is in the horizontal flight.

4. The airplane (10) according to any previous claim wherein the central module (26) has an opening (32) in its lower part.

5. The airplane (10) according to any previous claim wherein the central module (26) is adapted for carrying the surveillance equipment selected from the group consisting of a video camera, a photo camera, and a infra-red camera.

6. The airplane (10) according to any previous claim wherein the central module (26) is adapted for rotation in at least within ±90° range.

7. The airplane (10) according to claim 7 wherein the central module (26) is adapted for rotation in at least within ±180° range.

8. The airplane (10) according to any previous claim wherein the payload container is having a spindle-shaped form with the container axis parallel to the fuselage axis.

9. The airplane (10) according to claim 1 wherein the central module (26) is having a central position and a landing position, wherein the central position is the position when, during the horizontal flight, the surveillance equipment is targeting down, whereas the landing position is the position turned from the central position at at least 45°.

10. The airplane (10) according to claim 1 being adapted for hand launch.

## Patentansprüche

1. Ein entfernt kontrollierbares, für Bauchlandung geeignetes Flugzeug (10), enthaltend einen Rumpf (12), einen Flügel (14), ein Heck (16), einen Motor mit einem Propeller (18) und einen zur Tragung von einer Überwachungseinrichtung angepassten Nutzlastenbehälter (20) unter dem Rumpf, wobei
der Nutzlastenbehälter (20) ein Vordermodul (22), ein Achternmodul (24), die beide mit dem Rumpf (12) verbunden sind und einzeln entlang der Rumpfachse angeordnet sind, und ein Hauptmodul (26) umfasst, wobei das Hauptmodul (26) drehbar am Vordermodul (22) und am Achternmodul (24) beigefügt ist, **dadurch gekennzeichnet dass**
das Vordermodul (22) und das Achternmodul (24) jedes auf Pylonen (28, 30), die dem Rumpf (12) beigefügt sind, installiert sind, und das Flugzeug (10) zum Ersatz nur des Hauptmoduls (26) durch verschiedene ersetzbare Hauptmodule mit verschiedener Überwachungseinrichtung angepasst ist.

2. Das Flugzeug (10) nach einem der vorhergehenden Ansprüche, worin das Vordermodul (22) eine Navigationsvideokamera (34) umfasst.

3. Das Flugzeug (10) nach einem der vorhergehenden Ansprüche, worin der Nutzlastenbehälter (20) unter dem Rumpf derart angeordnet ist, dass das geometrische Zentrum vom Hauptmodul unter dem Flugzeugschwerpunkt befindet sich, wenn das Flugzeug (10) im horizontalen Flug ist.

4. Das Flugzeug (10) nach einem der vorhergehenden Ansprüche, worin das Hauptmodul (26) eine Öffnung (32) in seinem niedrigeren Teil hat.

5. Das Flugzeug (10) nach einem der vorhergehenden Ansprüche, worin das Hauptmodul (26) angepasst ist, die Überwachungseinrichtung, die von der Gruppe, bestehend aus einer Videokamera, einer Fotokamera und einer Infrarotkamera, ausgewählt ist, zu tragen.

6. Das Flugzeug (10) nach einem der vorhergehenden Ansprüche, worin das Hauptmodul (26)) zur Drehung mindestens innerhalb des Bereichs von ±90° angepasst ist.

7. Das Flugzeug (10) nach Anspruch 7, worin das Hauptmodul (26) zur Drehung mindestens innerhalb des Bereichs von ± 180° angepasst ist.

8. Das Flugzeug (10) nach einem der vorhergehenden Ansprüche, worin der Nutzlastenbehälter eine spindelförmige Form mit der Behälterachsen, parallelen zur Rumpfachse, hat.

9. Das Flugzeug (10) nach Anspruch 1, worin das Hauptmodul (26) eine Hauptposition und eine Landungsposition hat, wobei die Hauptposition die Position ist, wenn, während des horizontalen Flugs, die Kontrollenausrüstung nach unten gerichtet ist, wohingegen die Landungsposition die Position ist, die von der Hauptposition mindestens von 45° umgegedreht ist.

10. Das Flugzeug (10) nach Anspruch 1, die an den Handstart angepasst ist.

## Revendications

1. L'Avion (10) à commande à distance apte à atterrir sur le ventre, l'avion (10) comprenant un fuselage (12), une aile (14), une queue (16), un moteur à hélice (18) et un Conteneur de charge utile sous-fuselage (20) adapté pour transporter un équipement de surveillance, dans lequel
le conteneur de charge utile (20) comprend un module avant (22), un module arrière (24), tous deux couplés au fuselage (12) et espacés le long de l'axe du fuselage, et un module central (26), dans lequel le module central (26) est fixé de façon rotative au module avant (22) et au module arrière (24), caractérisé en ce quele module avant (22) et le module arrière (24) sont chacun installés sur des pylônes (28, 30) fixés au fuselage (12), et l'avion(10) est adapté pour le remplacement seulement du module central (26) par différents modules centraux remplaçables avec divers équipements de surveillance.

2. L'Avion (10) selon l'une des revendications précédentes, dans lequel le module avant (22) comprend une caméra vidéo de navigation (34).

3. L'Avion (10) selon l'une des revendications précédentes, dans lequel le conteneur (20) de charge utile sous le fuselage est tel que le centre géométrique du module central se trouve sous le centre de gravité de l'avion lorsque l'avion (10) est en vol horizontal.

4. L'Avion (10) selon l'une des revendications précédentes, dans lequel le module central (26) a une ouverture (32) dans sa partie inférieure.

5. L'Avion (10) selon l'une des revendications précédentes, dans lequel le module central (26) est adapté pour transporter l'équipement de surveillance choisi dans le groupe constitué par une caméra vidéo, une caméra photo et une caméra infrarouge.

6. L'Avion (10) selon l'une des revendications précédentes, dans lequel le module central (26) est adapté pour la rotation dans une plage d'au moins ± 90°.

7. L'Avion (10) selon la revendication 7, dans lequel le module central (26) est adapté pour la rotation dans une plage d'au moins ± 180°.

8. L'Avion (10) selon l'une des revendications précédentes, dans lequel le conteneur de charge utile a une forme fuselée avec l'axe du conteneur parallèle à l'axe du fuselage.

9. L'Avion (10) selon la revendication 1, dans lequel le module central (26) a une position centrale et une position d'atterrissage, où la position centrale est la position dans laquelle, pendant le vol horizontal, l'équipement de surveillance est ciblé vers le bas, alors que la position d'atterrissage est la position tournée de la position centrale d'au moins sur 45°.

10. L'Avion (10) selon la revendication 1, adapté pour le lancement manuel.
